# EUROPEAN PATENT SPECIFICATION

(11) **EP 3 498 519 B1**
(45) Date of publication and mention of the grant of the patent: **28.02.2024**
(21) Application number: 17857852.2
(22) Date of filing: 30.09.2017
(51) Int. Cl.: B60L 5/39, B60L 5/04

(54) **TRAIN CURRENT COLLECTING DEVICE**
SYSTEM ZUR ABNAHME VON ZUGSTROM
DISPOSITIF COLLECTEUR DE COURANT DE TRAIN

(30) Priority: 09.10.2016 CN 201610880589
(43) Date of publication of application: 19.06.2019
(73) Proprietor: Southwest Jiaotong University, Sichuan 610031 (CN); LI, Qunzhan, Sichuan 610031 (CN)
(72) Inventor: LI, Qunzhan, Chengdu Sichuan 610031 (CN)
(74) Representative: Meissner Bolte Partnerschaft mbB
(86) International application number: PCT/CN2017/105086
(87) International publication number: WO 2018/064971

(56) References cited:
- CN-A- 105 620 293
- CN-A- 105 857 118
- CN-A- 106 379 176
- CN-U- 204 452 066
- DE-A1-102007 011 709
- US-A- 4 238 010
- US-A- 4 246 986
- US-A- 5 180 041
- US-A1- 2013 126 287
- US-A1- 2015 352 959

## Description

### Field of the Invention

The present invention relates to the railway train power supply field, particularly to a double-pole current collecting structure and a current collecting technique.

### Background of the Invention

Electric trains employ a pantograph-catenary contact current collection (receiving) scheme, in which the catenary may be divided into flexible catenary and rigid catenary. Electric railways usually employ the pantograph-flexible catenary contact scheme, while urban railways employ the pantograph-flexible catenary contact scheme besides the pantograph-rigid catenary contact scheme. In addition, there is a collector shoe-third rail contact current collection scheme. As the name implies, the flexible catenary system belongs to a flexible system, while the third rail contact system and the rigid catenary system are rigid systems. Flexible systems usually bear tension besides the contact pressure of pantograph, while rigid systems only bear contact pressure but hardly bear tension. Compared with flexible systems, rigid systems have obvious advantages such as simple structure, high current capacity, high reliability and high durability, etc. However, rigid system involve problems related with structural form, suspension method, span length and dynamic performance matching with pantograph (collector shoe); in addition, the movement of the train in operation is transmitted directly to the catenary or the third rail via the pantograph or collector shoe, and affects the performance of contact current collection between the pantograph and the catenary or between the collector shoe and the third rail. Moreover, the influences of those factors are especially severe when the train is running at a high speed, and consequently seriously limit the play of the advantages of rigid systems. As a result, it is still difficult for rigid systems to adapt to high-speed railways up to now.

In addition, the current pantograph-catenary or collector shoe-third rail contact current collection method used by electrified railways and urban railways belongs to a monopole contact current collection method.

The applicant proposed "Power Supply Structure for Rail Transit (Chinese Application No. 201610213944.6)" previously, in which the power supply rail (and reflux rail) also belongs to a rigid system, but the power supply rail is fixedly mounted along an insulating base instead of suspended, and thereby the dynamic performance of the power supply rail is no longer limited by the original structure and span, providing a guarantee for satisfactory contact current collection. On the basis of that application, the present application proposes a double-pole contact current collection structure, which can eliminate the adverse effects on the current collection system incurred by lateral and vertical vibrations of the train during operation, maintain in a good contact condition, and give better play to the advantages of a rigid system, and is applicable to high-speed railway applications. US5180041 A discloses a current collecting apparatus for a railway vehicle. The apparatus ensures that a couple of collector shoes always come in contact with surfaces on both sides of a trolley rail under equivalent pressure. The constant surface contact and contact pressure is ensured when the railway vehicle is jolted to the transverse direction or during travelling along curved tracks.

### Summary of the Invention

The object of the present invention is to provide a current collecting device for a train, which can effectively eliminate the influence on contact-type current collection on the train incurred by lateral and vertical vibrations of the train, maintain the contact area between a collector shoe and a power supply rail and the contact area between a reflux shoe and a reflux rail at a constant value, so as to exert the advantages of a rigid system better. The current collecting device for a train is applicable to high-speed railway applications.

The object of the present invention is attained with the following technical scheme: a current collecting device for a train, comprising a collector arm and a current reflux arm connected with a bogie, a crossbeam is provided in the middle between the ends of the bogie of the train, two sets of bearing seats are provided below the crossbeam, the top end of the collector arm and the top end of the current reflux arm are hingedly connected with the bearing seats respectively via a rotating shaft arranged in parallel to the longitudinal direction of the train; an inverted t-shaped limiter is provided between the two sets of bearing seats, a top part of the limiter is fixed to a middle part of the bottom of the crossbeam, a bottom part of the limiter is overhung between the collector arm and the current reflux arm, with clearance at both sides of the limiter; two ends of a booster spring are fixed to the middle part of the collector arm and the middle part of the current reflux arm respectively; a fixed end of the collector shoe is hingedly connected with the bottom end of the collector arm, a free end of the collector shoe is in a convex semicircular shape and arranged in contact with a concave semicircular side of a power supply rail; a fixed end of the reflux shoe is hingedly connected with the bottom end of the current reflux arm, a free end of the reflux shoe is in a convex semicircular shape and arranged in contact with a concave semicircular side of a reflux rail; the bottom end of the collector arm and the bottom end of the current reflux arm are provided with limiting plates respectively, and the center lines of the limiting plates are perpendicular to a center line of the collector arm and a center line of the current reflux arm respectively.

The collector arm, the current reflux arm, and the limiter are made of an insulating material respectively.

The collector shoe and the reflux shoe are made of a wear-resistant conducting material respectively.

The same satisfactory contact effect can be attained if the free end of the collector shoe is made in a concave semicircular shape and the side of the power supply rail in contact with the collector shoe is made in a convex semicircular shape, or the free end of the reflux shoe is made in a concave semicircular shape and the side of the reflux rail in contact with the reflux shoe is made in a convex semicircular shape.

The booster spring is configured to generate contact pressure of the collector arm on the power supply rail and contact pressure of the current reflux arm on the reflux rail; the magnitude of the contact pressure may be calculated according to a model, and is usually 70-100N based on the experience.

The limiter is configured to limit the degree of closeness between the collector arm and the current reflux arm. The size of the clearance between two sides of the bottom part of the limiter and the collector arm/current reflux arm depends on the following factors: (1) specific position and size of the bottom part of the limiter and maximum amplitude of lateral vibration of the train; (2) requirement for insulation between the collector shoe and the reflux shoe after interruption of the power supply rail and the reflux rail when the train passes through a railway switch. To avoid collision and wearing between the two sides of the bottom part of the limiter and the collector arm/current reflux arm when the train passes through a railway switch, pads such as rubber pads or sponge pads may be provided at possible contact parts of the limiter.

The deflection angle of the collector shoe and the reflux shoe limited by the limiting plate at the bottom end of the collector arm and the current reflux arm may be ascertained through calculation from the maximum amplitude of lateral and vertical vibrations of the train, the length of the collector arm (current reflux arm), and the length of the collector shoe (reflux shoe).

The collector shoe and the reflux shoe supply power to the traction drive system of the train through cables respectively. To reduce external interference and meet high-speed aerodynamic requirements, the collector arm and the current reflux arm shall have through-holes, through which the cables can pass and are connected to the power supply system in the train.

The working principle of the present invention is as follows: the top end of the collector arm and the top end of the current reflux arm are hung from the bottom of the crossbeam arranged on the bogie of the train via the rotating shaft, the collector arm and the current reflux arm are in a pendulum form with respect to the transverse direction of the train; besides, the collector arm is hingedly connected with the collector shoe, the current reflux arm is hingedly connected with the reflux shoe, and the collector shoe and the reflux shoe can deflect in the vertical direction within a certain range, so that the lateral and vertical vibration forces of the train can't act on the power supply rail via the collector arm and the collector shoe respectively, and can't act on the reflux rail via the current reflux arm and the reflux shoe as well; thus, decoupling is realized and the adverse effect incurred by lateral and vertical vibrations of the train on the performance of contact-type current collection between the collector shoe and the power supply rail and between the reflux shoe and the reflux rail is eliminated, the contact area between the collector shoe and the power supply rail and the contact area between the reflux shoe and the reflux rail are maintained at a constant value, and thereby high current collection performance is maintained during the operation of the train.

Compared with the prior art, the present invention attains the following beneficial effects:
1. In the present invention, the top end of the collector arm and the top end of the current reflux arm are hinged with the bearing seats while the bottom end of the collector arm and the bottom end of the current reflux arm are hinged with the collector shoe and the reflux shoe respectively, so that the adverse effect incurred by lateral and vertical vibrations of the train in operation on the performance of the contact-type current collection between the collector shoe and the power supply rail and between the reflux shoe and the reflux rail can be eliminated, the contact area between the collector shoe and the power supply rail and the contact area between the reflux shoe and the reflux rail are maintained at a constant value, and thereby high contact current collection performance is maintained during the operation of the train.
2. The current collecting device provided in present invention is suitable for a rigid system fixedly mounted along an insulating base; with the device provided in the present invention, the dynamic performance of the rigid system is not limited by the original suspension structure and span anymore. The present invention is applicable to high-speed railway applications.
3. The collecting device provided in the present invention employs advanced techniques, has outstanding performance, and is easy to implement.

### Brief Description of Drawings

The accompanying drawings are provided to facilitate further understanding of the present invention and constitute a part of the patent application; the embodiments and associated description provided in the present invention are provided to interpret the present invention, and shall not be deemed as constituting any undue limitation to the present invention. In the figures:
Fig.1 is a schematic structural diagram of an embodiment of the present invention;
Fig. 2 is a schematic diagram of an embodiment of the present invention.

### Detailed Description of the Embodiments

Hereunder the present invention will be further detailed in embodiments, with reference to the accompanying drawings.

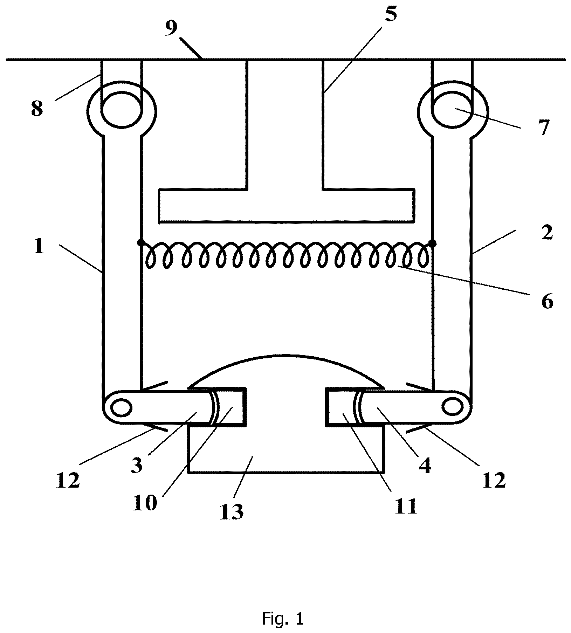

Fig. 1 shows an embodiment of the present invention: a current collecting device for a train, comprising a collector arm 1 and a current reflux arm 2 connected with a bogie, wherein, a crossbeam 9 is provided in the middle between the ends of the bogie of the train, two sets of bearing seats 8 are provided below the crossbeam 9, the top end of the collector arm 1 and the top end of the current reflux arm 2 are hinged with the bearing seats 8 respectively via rotating shafts 7 arranged in parallel to the longitudinal direction of the train; an inverted t-shaped limiter 5 is provided between the two sets of bearing seats 8, a top part of the limiter 5 is fixed to a middle part of the bottom of the crossbeam 9, a bottom part of the limiter 5 is overhung between the collector arm 1 and the current reflux arm 2, with clearance at both sides of the limiter 5; two ends of a booster spring 6 are fixed to the middle part of the collector arm 1 and the middle part of the current reflux arm 2 respectively; a fixed end of the collector shoe 3 is hinged with the bottom end of the collector arm 1, a free end of the collector shoe 3 is in a convex semicircular shape and arranged in contact with a concave semicircular side of a power supply rail 10; a fixed end of the reflux shoe 4 is hinged with the bottom end of the current reflux arm 2, a free end of the reflux shoe 4 is in a convex semicircular shape and arranged in contact with a concave semicircular side of a reflux rail 11; the bottom end of the collector arm 1 and the bottom end of the current reflux arm 2 are both provided with a limiting plate 12; when the train is stopped in a straight section the horizontal center lines of the limiting plates 12 (i.e., the horizontal center line of the collector shoe 3 or the reflux shoe 4 when the train is stopped in a straight section) is perpendicular to a vertical center line of the collector arm 1 and a vertical center line of the current reflux arm 2 respectively.

The collector arm 1 and the current reflux arm 2 are made of an insulating material respectively.

The collector shoe 3 and the reflux shoe 4 are made of wear-resistant conducting material respectively.

The power supply rail 10 and the reflux rail 11 are mounted and fix to insulating base 13.

When the train is stopped in a straight section, the collector arm 1 is parallel to the current reflux arm 2; the collector shoe 3 is perpendicular to the collector arm 1, and the reflux shoe 4 is perpendicular to the current reflux arm 2.

Fig. 1 is a front view. The structure shown in Fig. 1 is in bilateral symmetry. The center line of the structure intersects with the center point between two rails when the train is stopped in a straight section.

The current collecting device for a train is applicable to urban railways and high-speed railways that employ a monolithic track bed; the collector shoe 3, the reflux shoe 4, the collector arm 1, the current reflux arm 2, and the crossbeam 9 form a quadrangle; the quadrangle is deformed as the train vibrates in the lateral direction or vertical direction, wherein, the clearance between the collector shoe 3 and the reflux shoe 4 and the insulating base 13 can meet the inclination requirement for the collector shoe 3 and the reflux shoe 4. The limiting plates 12 are configured to limit the deflection of the collector shoe and the reflux shoe in the vertical direction.

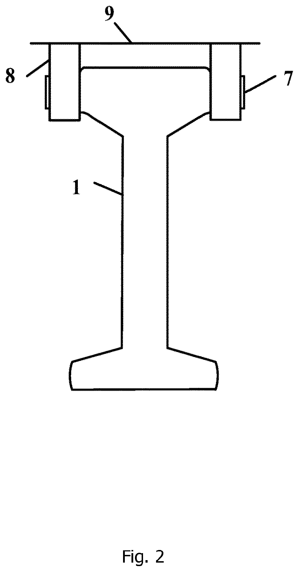

Fig. 2 is a left view of the structure in the present invention, and mainly depicts the collector arm 1, which is in a wasp waist shape. The top end of the collector arm 1 is hinged with the bearing seat 8 via the rotating shaft 7 arranged in parallel to the longitudinal direction of the train, is overhung below the crossbeam 9, and has a structure with enlarged top width to improve stress bearing capacity; the width of the bottom end of the collector arm 1 is enlarged to facilitate hinged connection with the collector shoe 3. Usually, the collector shoe 3 has higher current capacity and greater sectional area. The current reflux arm 2 is in the same structure and shape as the collector arm 1.

## Claims

1. A current collecting device for a train, comprising a collector arm (1) and a current reflux arm (2), **characterised in that**, the current collecting device for a train further comprises:
two sets of bearing seats (8) used for being set on a bogie of the train;
wherein the top end of the collector arm (1) is hinged with one of the two sets of bearing seats (8), and the top end of the current reflux arm (2) is hinged with the other one of the two sets of bearing seats (8);
a collector shoe (3);
a reflux shoe (4);
wherein a fixed end of the collector shoe (3) is hinged with the bottom end of the collector arm (1), a free end of the collector shoe (3) is arranged in contact with a power supply rail (10), a fixed end of the reflux shoe (4) is hinged with the bottom end of the reflux arm (2), and a free end of the reflux shoe (4) is arranged in contact with a reflux rail (11);
wherein the free end of the collector shoe (3) is in a convex semicircular shape and is in contact with a concave semicircular side of the power supply rail (10); the free end of the reflux shoe (4) is in a convex semicircular shape and is in contact with a concave semicircular side of the reflux rail (11);
or, the free end of the collector shoe (3) is in a concave semicircular shape and is in contact with a convex semicircular side of the power supply rail (10); the free end of the reflux shoe (4) is in a concave semicircular shape and is in contact with a convex semicircular side of the reflux rail (11);
a booster spring (6);
wherein one end of the booster spring (6) is connected with the collector arm (1), and the other end of the booster spring (6) is connected with the reflux arm (2).

2. The current collecting device for a train according to claim 1, **characterised in that**, the current collecting device for a train further comprising a crossbeam (9) used for being set in the middle between the ends of the bogie, the two sets of bearing seats (8) are disposed below the crossbeam (9).

3. The current collecting device for a train according to claim 1, **characterised in that**, the current collecting device for a train further comprising a limiter (5), a top part of the limiter (5) is located between the two sets of bearing seats (8), a bottom part of the limiter (5) is overhung between the collector arm (1) and the current reflux arm (2), with a clearance between the bottom part of the limiter (5) and the collector arm (1) and a clearance between the bottom part of the limiter (5) and the current reflux arm (2).

4. The current collecting device for a train according to claim 2, **characterised in that**, the current collecting device for a train further comprising a limiter (5) connected with the crossbeam (9), the top part of the limiter (5) is fixed to a middle part of the bottom of the crossbeam (9), the bottom part of the limiter (5) is overhung between the collector arm (1) and the current reflux arm (2) with clearance at both sides of the bottom part.

5. The current collecting device for a train according to any one of claims 1-4, **characterised in that**, one end of the booster spring (6) is arranged on a middle part of the collector arm (1), and the other end of the booster spring (6) is arranged on a middle part of the reflux arm (2).

6. The current collecting device for a train according to any one of claims 1-4, **characterised in that**, the bottom end of the collector arm (1) and the bottom end of the current reflux arm (2) are both provided with a limiting plate (12), and the horizontal center lines of the limiting plates (12) are perpendicular to the vertical center line of the collector arm (1) and the vertical center line of the current reflux arm (2) respectively.

7. The current collecting device for a train according to any one of claims 1-4, **characterised in that**, the current collecting device for a train further comprising two rotating shafts (7) arranged in parallel to the longitudinal direction of the train, the top end of the collector arm (1) is hinged with one of the two sets of bearing seats (8) via one of the two rotating shafts (7), and the top end of the current reflux arm (2) is hinged with the other one of the two sets of bearing seats (8) via the other one of the two pivots (7).

8. The current collecting device for a train according to claim 3, **characterised in that**, the collector arm (1), the current reflux arm (2), and the limiter (5) are made of insulating material respectively.

9. The current collecting device for a train according to any one of claims 1 - 8, **characterised in that**, the collector shoe (3) and the reflux shoe (4) are made of wear-resistant conducting material respectively.

## Patentansprüche

1. Stromsammelvorrichtung für einen Zug, umfassend einen Stromabnehmerarm (1) und einen Stromrückflussarm (2), **dadurch gekennzeichnet, dass** die Stromsammelvorrichtung für einen Zug des Weiteren umfasst:
zwei Lagerblocksätze (8), die verwendet werden, um auf ein Drehgestell des Zuges gesetzt zu werden;
wobei das obere Ende des Stromabnehmerarms (1) mit einem der beiden Lagerblocksätze (8) gelenkig verbunden ist, und das obere Ende des Stromrückflussarms (2) mit dem anderen Ende der beiden Lagerblocksätze (8) gelenkig verbunden ist;
einen Kontaktschuh (3);
einen Rückflussschuh (4);
wobei ein befestigtes Ende des Kontaktschuhs (3) mit dem unteren Ende des Stromabnehmerarms (1) gelenkig verbunden ist, ein freies Ende des Kontaktschuhs (3) mit einer Stromversorgungsschiene (10) in Kontakt gebracht wird, ein befestigtes Ende des Rückflussschuhs (4) mit dem unteren Ende des Rückflussarms (2) gelenkig verbunden ist, und ein freies Ende des Rückflussschuhs (4) mit einer Rückflussschiene (11) in Kontakt gebracht wird;
wobei das freie Ende des Kontaktschuhs (3) eine nach außen gewölbte Halbrundform ist und mit einer nach innen gewölbten, halbrunden Seite der Stromversorgungsschiene (10) sich in Kontakt befindet; das freie Ende des Rückflussschuhs (4) eine nach außen gewölbte Halbrundform ist und mit einer nach innen gewölbten, halbrunden Seite der Rückflussschiene (11) sich in Kontakt befindet;
oder, das freie Ende des Kontaktschuhs (3) eine nach innen gewölbte Halbrundform ist und mit einer nach außen gewölbten, halbrunden Seite der Stromversorgungsschiene (10) sich in Kontakt befindet; das freie Ende des Rückflussschuhs (4) eine nach innen gewölbte Halbrundform ist und mit einer nach außen gewölbten, halbrunden Seite der Rückflussschiene (11) sich in Kontakt befindet;
eine Verstärkungsfeder (6);
wobei ein Ende der Verstärkungsfeder (6) mit dem Stromabnehmerarm (1) verbunden ist, und das andere Ende der Verstärkungsfeder (6) mit dem Rückflussarm (2) verbunden ist.

2. Stromsammelvorrichtung für einen Zug nach Anspruch 1, **dadurch gekennzeichnet, dass** die Stromsammelvorrichtung für einen Zug des Weiteren einen Querträger (9) umfasst, der verwendet wird, um in der Mitte zwischen den Enden des Drehgestells eingesetzt zu werden, wobei die zwei Lagerblocksätze (8) unter dem Querträger (9) angeordnet sind.

3. Stromsammelvorrichtung für einen Zug nach Anspruch 1, **dadurch gekennzeichnet, dass** die Stromsammelvorrichtung für einen Zug des Weiteren einen Begrenzer (5) aufweist, wobei ein oberer Teil des Begrenzers (5) zwischen den zwei Lagerblocksätzen (8) liegt, ein unterer Teil des Begrenzers (5) zwischen dem Stromabnehmerarm (1) und dem Stromrückflussarm (2) mit einem Abstand zwischen dem unteren Teil des Begrenzers (5) und dem Stromabnehmerarm (1) und einem Abstand zwischen dem unteren Teil des Begrenzers (5) und dem Stromrückflussarm (2) aufgehängt ist.

4. Stromsammelvorrichtung für einen Zug nach Anspruch 2, **dadurch gekennzeichnet, dass** die Stromsammelvorrichtung für einen Zug des Weiteren einen mit dem Querträger (9) verbundenen Begrenzer (5) aufweist, wobei der obere Teil des Begrenzers (5) an einem Mittelteil der Unterkante des Querträgers (9) befestigt ist, der untere Teil des Begrenzers (5) zwischen dem Stromabnehmerarm (1) und dem Stromrückflussarm (2) mit einem Abstand auf beiden Seiten des unteren Teils aufgehängt ist.

5. Stromsammelvorrichtung für einen Zug nach einem der Ansprüche 1 bis 4, **dadurch gekennzeichnet, dass** das eine Ende der Verstärkungsfeder (6) an einem Mittelteil des Stromabnehmerarms (1) angeordnet ist, und das andere Ende der Verstärkungsfeder (6) an einem Mittelteil des Rückflussarms (2) angeordnet ist.

6. Stromsammelvorrichtung für einen Zug nach einem der Ansprüche 1 bis 4, **dadurch gekennzeichnet, dass** das untere Ende des Stromabnehmerarms (1) und das untere Ende des Stromrückflussarms (2) beide mit einem Begrenzungsblech (12) versehen sind, und die horizontalen Mittellinien der Begrenzungsbleche (12) jeweils lotrecht zu der vertikalen Mittellinie des Stromabnehmerarms (1) und der vertikalen Mittellinie des Stromrückflussarms (2) sind.

7. Stromsammelvorrichtung für einen Zug nach einem der Ansprüche 1 bis 4, **dadurch gekennzeichnet, dass** die Stromsammelvorrichtung für einen Zug des Weiteren zwei rotierende Wellen (7) umfasst, die parallel zur Längsrichtung des Zuges angeordnet sind, wobei das obere Ende des Stromabnehmerarms (1) über eine der zwei rotierenden Wellen (7) mit einem der beiden Lagerblocksätze (8) gelenkig verbunden ist, und das obere Ende des Stromrückflussarms (2) über den anderen der zwei Drehzapfen (7) mit dem anderen der beiden Lagerblocksätze (8) gelenkig verbunden ist.

8. Stromsammelvorrichtung für einen Zug nach Anspruch 3, **dadurch gekennzeichnet, dass** der Stromabnehmerarm (1), der Stromrückflussarm (2) und der Begrenzer (5) jeweils aus Isoliermaterial hergestellt sind.

9. Stromsammelvorrichtung für einen Zug nach einem der Ansprüche 1 bis 8, **dadurch gekennzeichnet, dass** der Kontaktschuh (3) und der Rückflussschuh (4) jeweils aus verschleißfestem Leitermaterial hergestellt sind.

## Revendications

1. Dispositif collecteur de courant pour un train, comprenant un bras collecteur (1) et un bras de reflux de courant (2), **caractérisé en ce que** le dispositif collecteur de courant pour un train comprend en outre :
deux ensembles de sièges de palier (8) utilisés pour être placés sur un bogie du train ;
dans lequel l'extrémité supérieure du bras collecteur (1) est reliée en articulation à l'un des deux ensembles de sièges de palier (8), et l'extrémité supérieure du bras de reflux de courant (2) est reliée en articulation à l'autre des deux ensembles de sièges de palier (8) ;
un sabot collecteur (3) ;
un sabot de reflux (4) ;
une extrémité fixe du sabot collecteur (3) étant reliée en articulation à l'extrémité inférieure du bras collecteur (1), une extrémité libre du sabot collecteur (3) étant disposée en contact avec un rail d'alimentation électrique (10), une extrémité fixe du sabot de reflux (4) étant reliée en articulation à l'extrémité inférieure du bras de reflux (2), et une extrémité libre du sabot de reflux (4) étant disposée en contact avec un rail de reflux (11) ;
l'extrémité libre du sabot collecteur (3) ayant une forme semi-circulaire convexe et étant en contact avec un côté semi-circulaire concave du rail d'alimentation électrique (10) ; l'extrémité libre du sabot de reflux (4) ayant une forme semi-circulaire convexe et étant en contact avec un côté semi-circulaire concave du rail de reflux (11) ;
ou
l'extrémité libre du sabot collecteur (3) ayant une forme semi-circulaire concave et étant en contact avec un côté semi-circulaire convexe du rail d'alimentation électrique (10) ; l'extrémité libre du sabot de reflux (4) ayant une forme semi-circulaire concave et étant en contact avec un côté semi-circulaire convexe du rail de reflux (11) ;
un ressort de renfoncement (6) ;
une extrémité du ressort de renforcement (6) étant reliée au bras collecteur (1), et l'autre extrémité du ressort de renforcement (6) étant reliée au bras de reflux (2).

2. Dispositif collecteur de courant pour un train selon la revendication 1,
**caractérisé en ce que** le dispositif collecteur de courant pour un train comprend en outre une traverse (9) utilisée pour être placée au milieu entre les extrémités du bogie, les deux ensembles de sièges de palier (8) étant disposés sous la traverse (9).

3. Dispositif collecteur de courant pour un train selon la revendication 1,
**caractérisé en ce que** le dispositif collecteur de courant pour un train comprend en outre un limiteur (5), une partie supérieure du limiteur (5) étant située entre les deux ensembles de sièges de palier (8), une partie inférieure du limiteur (5) étant en porte-à-faux entre le bras collecteur (1) et le bras de reflux de courant (2), avec un jeu entre la partie inférieure du limiteur (5) et le bras collecteur (1) et un jeu entre la partie inférieure du limiteur (5) et le bras de reflux de courant (2).

4. Dispositif collecteur de courant pour un train selon la revendication 2,
**caractérisé en ce que** le dispositif collecteur de courant pour un train comprend en outre un limiteur (5) relié à la traverse (9), la partie supérieure du limiteur (5) étant fixée à une portion centrale de la partie inférieure de la traverse (9), la partie inférieure du limiteur (5) étant en porte-à-faux entre le bras collecteur (1) et le bras de reflux de courant (2), avec un jeu des deux côtés de la partie inférieure.

5. Dispositif collecteur de courant pour un train selon l'une des revendications 1 à 4,
**caractérisé en ce qu'**une extrémité du ressort de renforcement (6) est disposée sur une portion centrale du bras collecteur (1), et l'autre extrémité du ressort de renforcement (6) est disposée sur une portion centrale du bras de reflux (2).

6. Dispositif collecteur de courant pour un train selon l'une des revendications 1 à 4,
**caractérisé en ce que** l'extrémité inférieure du bras collecteur (1) et l'extrémité inférieure du bras de reflux de courant (2) sont toutes deux pourvues d'une plaque de limitation (12), et les lignes centrales horizontales des plaques de limitation (12) sont perpendiculaires à la ligne centrale verticale du bras collecteur (1) et à la ligne centrale verticale du bras de reflux de courant (2), respectivement.

7. Dispositif collecteur de courant pour un train selon l'une des revendications 1 à 4,
**caractérisé en ce que** le dispositif collecteur de courant pour un train comprend en outre deux arbres rotatifs (7) disposés parallèlement à la direction longitudinale du train, l'extrémité supérieure du bras collecteur (1) étant reliée en articulation à l'un des deux ensembles de sièges de palier (8) par l'intermédiaire de l'un des deux arbres rotatifs (7), et l'extrémité supérieure du bras de reflux de courant (2) étant reliée en articulation à l'autre des deux ensembles de sièges de palier (8) par l'intermédiaire de l'autre des deux pivots (7).

8. Dispositif collecteur de courant pour un train selon la revendication 3,
**caractérisé en ce que** le bras collecteur (1), le bras de reflux de courant (2) et le limiteur (5) sont chacun constitués d'un matériau isolant.

9. Dispositif collecteur de courant pour un train selon l'une des revendications 1 à 8,
**caractérisé en ce que** le sabot collecteur (3) et le sabot de reflux (4) sont chacun constitués d'un matériau conducteur résistant à l'usure.
